(19) Europäisches Patentamt
European Patent Office
Office européen des brevets

(11) Veröffentlichungsnummer : **0 374 627 B1**

(12) # EUROPÄISCHE PATENTSCHRIFT

(45) Veröffentlichungstag der Patentschrift :
**01.03.95 Patentblatt 95/09**

(51) Int. Cl.[6] : **G02B 1/08,** G02B 5/30

(21) Anmeldenummer : **89122659.9**

(22) Anmeldetag : **08.12.89**

(54) **Hochwirksame Polarisatoren.**

(30) Priorität : **21.12.88 DE 3842967**
**18.02.89 DE 3905027**

(43) Veröffentlichungstag der Anmeldung :
**27.06.90 Patentblatt 90/26**

(45) Bekanntmachung des Hinweises auf die Patenterteilung :
**01.03.95 Patentblatt 95/09**

(84) Benannte Vertragsstaaten :
**BE CH DE FR GB IT LI NL SE**

(56) Entgegenhaltungen :
**EP-A- 0 210 498**
**EP-A- 0 249 019**
**DE-A- 3 334 181**
**DE-A- 3 403 493**
**DE-A- 3 617 502**

(73) Patentinhaber : **BAYER AG**
**D-51368 Leverkusen (DE)**

(72) Erfinder : **Ostoja Starzewski, Karl Heinz Aleksander, Dr.**
**Jeschkenweg 10**
**D-6368 Bad Vilbel (DE)**

EP 0 374 627 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft hochwirksame Polarisatoren aus polyacetylenhaltigen Polymerprodukten, deren Matrix ein Copolymer ist, bei dem 70 bis 90 % aller Comonomereinheiten Vinylalkoholeinheiten sind, die ein hohes dichroitisches Verhältnis $Q_E$ bei gleichzeitig sehr hohem Polarisationsgrad P haben, Solche Polarisatoren werden als Folie eingesetzt.

Die Herstellung von Polarisationsfolien auf Basis von Polyvinylalkohol und Iod ist beispielsweise aus DD 141 076 bekannt. Dabei wird eine Polyvinylalkoholfolie nachträglich eingefärbt. Um einigermaßen befriedigende Ergebnisse zu erhalten, bedarf es komplizierter Herstellungs- und Nachbehandlungsverfahren. Dennoch ist in der Regel nur ein Teil der so erhaltenen Folie brauchbar. Die Herstellung solcher Polarisationsfolien ist in der Praxis neben Iod auf nur wenige dichroitisch hochwirksame Substanzen begrenzt, was deren Anwendbarkeit einschränkt,

Verbesserte Polarisatoren auf der Basis von in Polymermatrices eingebundenem Polyacetylen sind ferner aus EP 249 019 bekannt. Die daraus erhaltenen Folien zeigen bereits eine hohe optische Qualität. So wird beispielsweise nach der Polymerisation von Acetylen in einer Lösung von Polyvinylalkohol in DMF eine Polarisationsfolie erhalten, die nach einer Verstreckung auf das 4-fache eine lichtpolarisierende Wirkung von mehr als 90 % aufweist.

Diese aus der genannten EP-Anmeldung bekannten Folien zeigen jedoch für "high tech"-Anwendungen noch kein ausreichend hohes dichroitisches Verhältnis, das als der Quotient $Q_E$ der Extinktion in der Sperrstellung zur Extinktion in der Durchlaßstellung definiert ist. Die im Ausführungsbeispiel der genannten EP-Anmeldung genannte Folie ist rotbraun gefärbt.

Es wurden nun hochwirksame Polarisatoren aus polyacetylenhaltigen Polymerprodukten, deren Matrix ein Copolymer ist, bei dem 70 bis 90 % aller Comonomereinheiten Vinylalkoholeinheiten sind, mit einem maximalen Polarisationsgrad P von mindestens 95 % und einem dichroitischen Verhältnis $Q_E$ über nahezu den gesamten Wellenlängenbereich des sichtbaren Lichts von 400 bis 800 nm von $Q_E$ = Quotient der Extinktion in der Sperrstellung zur Extinktion in der Durchlaßstellung = 10 oder größer in der Form von verstreckten Folien gefunden.

Die Erfindung wird durch die Merkmale vom Anspruch 1 definiert.

Die polarisierende Wirkung setzt sich im nahen IR- und UV-Bereich fort.

Solche Polarisatoren werden als Folien eingesetzt,bei denen eine Vorzugsrichtung durch Verstrecken erzeugt wird. Es wurde weiterhin gefunden, daß die hohe Wirksamkeit der erfindungsgemäßen Polarisatoren bei höheren Verstreckungsgraden verbessert werden kann. Die erfindungsgemäßen Polarisatoren haben einen Verstreckungsgrad ε von mindestens 600%. Der Verstreckungsgrad ε ist hierbei durch den Quotienten

$$\varepsilon = \frac{l - l_o}{l_o} \cdot 100$$

definiert, wobei l die Länge nach dem Verstrecken und $l_0$ die Länge vor dem Verstrecken darstellt.

Die erfindungsgemäßen hochwirksamen Polarisatoren haben neben dem genannten dichroitischen Verhältnis $Q_E$ = 10 oder größer zusätzlich einen hohen maximalen Polarisationsgrad P von mindestens 95 %, bevorzugt mindestens 98 %, besonders bevorzugt mindestens 99 %. Die Maximalwerte von $Q_E$ erreichen Werte von 15 und darüber, bevorzugt 20 und darüber.

Der Polarisationsgrad P ist hierbei gegeben durch die Verknüpfung von Transmission linear polarisierten Lichts in Durchlaßstellung bzw. Sperrstellung (Transmiss. Durch. bzw. Sperr.):

$$P = \frac{\text{Transmiss. Durch.} - \text{Transmiss. Sperr}}{\text{Transmiss. Durch.} + \text{Transmiss. Sperr}} \cdot 100$$

Das dichroitische Verhältnis $Q_E$ ist als Quotient der Extinktion in der Sperrstellung zur Extinktion in der Durchlaßstellung definiert. Dieses Verhältnis gilt für eine bestimmte Wellenlänge und ist bei geeigneten dichroitischen Farbstoffen auf einen engen Wellenlängenbereich des sichtbaren Lichts beschränkt. Dies ist an der Eigenfarbe der mit Hilfe von dichroitischen Farbstoffen hergestellten Polarisatoren erkennbar; die genannten Stoffe sind noch dazu schwierig in gleichmäßiger Form über eine größere Fläche einer damit einzufärbenden Folie zu verteilen.

Demgegenüber zeigen die erfindungsgemäßen Polarisatoren einen hohen $Q_E$-Wert über nahezu den gesamten Bereich des sichtbaren Lichts und sind daher weitgehend farbneutral, was durch ihre graue Eigenfarbe erkennbar ist. Dies entspricht dem Wunsch, farbneutrale Polarisatoren mit hohem Hell- Dunkel-Kontrast zur Verfügung zu haben. Dies ist wichtig für optische Kommunikationsmittel, wie LCDs mit außen- oder innenliegender Polarisationsfolie, bei denen hohe Auflösung und gute Ablesbarkeit angestrebt werden.

Die erfindungsgemäßen hochwirksamen Polarisatoren sind herstellbar durch Polymerisation von Acetylen in der Lösung eines Copolymer, bei dem 70 bis 90 % aller Comonomereinheiten Vinylalkoholeinheiten sind, in

Gegenwart eines Nickel-Katalysators, der erhalten wird durch Umsetzung einer Nickel-(0)-Verbindung oder einer Verbindung, die in situ in eine Nickel-(0)-Verbindung übergeführt werden kann, mit Phosphorverbindungen der Formeln

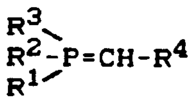 (I) und 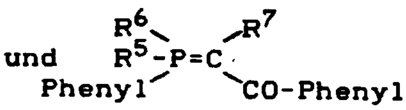 (II)

worin

| | |
|---|---|
| $R^1$, $R^2$ und $R^3$ | unabhängig voneinander $C_1$-$C_8$-Alkyl, Phenyl oder Benzyl bedeuten, |
| $R^4$ | für Wasserstoff, $C_1$-$C_8$-Alkyl oder Phenyl steht und |
| $R^5$, $R^6$ und $R^7$ | unabhängig voneinander $C_1$-$C_8$-Alkyl oder Phenyl bedeuten, wobei $R^7$ zusätzlich Wasserstoff oder Acyl bedeuten kann, |

oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder einem Gemisch aus p-Benzochinon und einem Phosphin der Formel

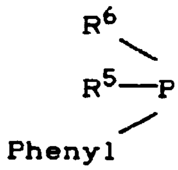 (III),

in der $R^5$ und $R^6$ die genannte Bedeutung haben, und einer Verbindung der Formel (I).

Diese Polymerisate werden zu Folien verarbeitet, die verstreckt werden.

In bevorzugter Form wird die Acetylen-Polymerisation in Gegenwart von Nickel-Katalysatoren durchgeführt, die herstellbar sind durch Umsetzung einer Nickel-(O)-Verbindung oder einer Verbindung, die in situ in eine Nickel-(O)-Verbindung übergeführt werden kann, mit Verbindungen der Formeln

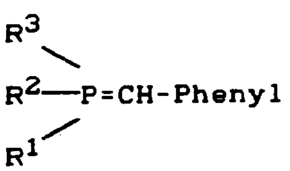 (IV) und 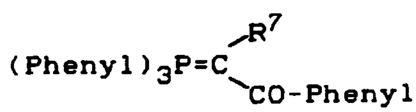 (V),

worin

$R^1$, $R^2$, $R^3$ und $R^7$ die oben genannte Bedeutung haben, oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder Gemisch aus p-Benzochinon und Triphenylphosphin und einer Verbindung der Formel (IV).

Zur Herstellung des Katalysators werden pro Mol Nickel-(0)-Verbindung 1-4 Mol der Verbindung der Formel (I) bzw. (IV) und 1-4 Mol der Verbindung der Formel (II) bzw. (V), bevorzugt pro Mol der Nickel-(0)-Verbindung etwa 1 Mol der Verbindung der Formel (I) bzw. (IV) und etwa 1 Mol der Verbindung der Formel (II) bzw. (V) eingesetzt. Gleiche molare Verhältnisse gelten, wenn an Stelle einer Verbindung der Formel (II) bzw. (V) ein p-Benzochinon/Phosphin-Addukt oder -Gemisch der beschriebenen Art tritt.

Die Temperatur zur Herstellung des Katalysators beträgt 0 bis 100°C, bevorzugt 20 bis 70°C. Bei der Herstellung wird unter Ausschluß von Sauerstoff, vorzugsweise in einem Lösungsmittel, das gegenüber den Reaktanden inert sein muß, wie Benzol, Toluol, Cyclohexan oder n-Hexan, gearbeitet. Nach seiner Herstellung wird der Katalysator als Feststoff gewöhnlich durch Filtrieren isoliert, wobei man nach Bedarf die Lösung zuvor einengt und/oder abkühlt. Der Katalysator kann jedoch auch ohne Isolierung, d.h. als Lösung, direkt zur Polymerisation von Acetylen eingesetzt werden.

Als Nickel-(0)-Verbindungen seien beispielhaft Ni(cyclooctadien)$_2$ und Ni(allyl)$_2$ genannt. Als Nickelverbindungen, die in situ in Nickel-(0)-Verbindungen übergeführt werden können, seien beispielsweise genannt: Ni-acetylacetonat, Ni-octanoat und Ni-stearat, die mit Hilfe von üblichen Reduktionsmitteln, wie Boranat, Alanat, Aluminiumalkylen oder Lithiumorganylen, reduziert werden können.

Als $C_1$-$C_8$-Alkyl, das geradkettig oder verzweigt sein kann, seien beispielsweise genannt: Methyl, Ethyl, Propyl, Isopropyl, Butyl, Isobutyl, tert.-Butyl, die isomeren Amyle, Hexyle und Octyle. Bevorzugtes Alkyl hat 1-4 C-Atome.

Als Acyl sei $C_1$-$C_8$-Alkylcarbonyl oder Phenylcarbonyl genannt, wie Acetyl, Propionyl, Butyryl $C_5$-Alkyl-carbonyl, $C_8$-Alkyl-carbonyl, Benzoyl oder substituiertes Benzoyl. Bevorzugtes Acyl ist substituiertes oder nicht substituiertes $C_1$-$C_4$-Alkylcarbonyl oder Benzoyl. Besonders bevorzugt sind Acetyl und Benzoyl.

Alkyl, Phenyl und Benzyl können ein- bis dreifach, bevorzugt ein-oder zweifach, besonders bevorzugt einfach durch $C_1$-$C_4$-Alkyl, durch $C_1$-$C_4$-Alkoxy, durch Phenyl oder Phenoxy substituiert sein, wobei bei mehrfacher Substitution die Substituenten verschiedene aus der genannten Aufzählung sein können.

Die zur Acetylenpolymerisation eingesetzte Menge des Nickel-Katalysators ist nicht kritisch. Typische Katalysatorkonzentrationen liegen bei $10^{-1}$ bis $10^{-5}$, bevorzugt $10^{-2}$-$10^{-4}$ Mol, besonders bevorzugt $1 \cdot 10^{-3}$ bis $5 \cdot 10^{-3}$ Mol Nickel-Katalysator pro Liter Polymerisationsansatz.

Die Polymerisation des Acetylens kann sowohl kontinuierlich als auch diskontinuierlich durchgeführt werden. Hierbei wird eine Temperatur von 20-120°C, bevorzugt 40 bis 110°C, besonders bevorzugt 50-90°C, eingehalten.

Die Polymerisation kann bei Normaldruck durchgeführt werden, jedoch ist auch eine Polymerisation unter erhöhtem Druck, gegebenenfalls im Gemisch mit Inertgas, wie $N_2$, beispielsweise bei 1,01 bis 20 bar, möglich. Das Acetylen kann ohne weitere Reinigung aus einer Druckflasche entnommen und verwendet werden. Bei acetonempfindlichen Katalysatoren kann es erforderlich sein, im Acetylen etwa enthaltenes Aceton zuvor in einer Kühlfalle auszufrieren.

Die Acetylen-Polymerisation wird in der Lösung eines Copolymer, bei dem 70 bis 90 % aller Comonomereinheiten Vinylalkoholeinheiten sind und das in vorwiegend taktischer oder ataktischer Form vorliegen kann, durchgeführt. Die restlichen 30 bis 10 % aller Comonomereinheiten können beispielsweise Ethyleneinheiten und/oder Vinylacetateinheiten und/oder Vinyltrifluoracetateinheiten und/oder Einheiten anderer copolymerisationsfähiger olefinischer Monomerer sein. Die Herstellung solcher Copolymerer ist dem Fachmann bekannt und kann beispielsweise so vorgenommen werden, daß ein Ethylen-Vinylacetat(-trifluoracetat)-Copolymer oder ein Vinylacetat(-trifluoracetat)-Homopolymer oder ein geeignetes anderes Copolymer, das in Vinylalkoholeinheiten umwandelbare Monomereinheiten enthält, bis zum benannten Gehalt an freien Vinylalkoholeinheiten verseift oder umgewandelt wird.

Lösungsmittel für die Polymerisation sind beispielsweise Dimethylformamid (DMF), Dimethylsulfoxid (DMSO), Dimethylacetamid u.a. Die Konzentration des Polymers in Lösungsmittel beträgt 1-20 Gew.-%, bevorzugt 2-10 Gew.-%.

Das Polymerisationsmedium (Lösung des Copolymer) kann Wasser im Prozentbereich, beispielsweise zu 0,001 bis 5 Gew.-%, enthalten, ohne daß der Katalysator desaktiviert wird. Ein solches Wasser kann über das Lösungsmittel, über das Copolymer oder über beide eingebracht werden. Bevorzugt ist der $H_2O$-Gehalt jedoch so niedrig wie möglich und geht besonders bevorzugt gegen den Wert Null.

Zur Herstellung der erfindungsgemäßen hochwirksamen Polarisatoren wird die Acetylen-Polymerisation in einer Zeit von 5-1000 sec., bevorzugt 5-600 sec., durchgeführt. Ein besonderer Vorteil besteht in der Möglichkeit, es in sehr kurzer Zeit, beispielsweise bei 5 - 300 sec., bevorzugt 5-200 sec., durchzuführen. Solche sehr kurzen Zeiten sind beispielsweise anzuwenden, wenn das Acetylen an eine sehr dünne Schicht der katalysatorhaltigen Polymerlösung herangebracht wird.

Die hierbei erhältlichen Lösungen von polyacetylenhaltigen Polymerprodukten zeigen eine blaue Farbe, die auch beim festen polyacetylenhaltigen Polymerprodukt nach Abdampfen des Lösungsmittels erhalten bleibt. Es ist überraschend, daß die blaue Farbe ein einfach erkennbares äußeres Kennzeichen für die hohe Wirksamkeit der erfindungsgemäßen Polarisatoren darstellt.

Die Eigenschaften der polyacetylenhaltigen Polymerprodukte sind vereinbar mit einem Strukturmodell, bei dem Polyacetylenseitenäste auf die Polymermatrix aufgepfropft sind.

Die erfindungsgemäßen Polarisatoren werden in Form von Folien nach der Gießtechnik oder der Extrusionstechnik hergestellt, die anschließend verstreckt werden. Zum Gießen kann unmittelbar die Polymerisationslösung in einer dem Fachmann bekannten Weise eingesetzt werden. Hierzu können auch polyacetylenhaltige Polymerlösungen mit nichtpolyacetylenhaltigen Ausgangspolymerlösungen oder mit anderen polyacetylenhaltigen Polymerlösungen verschnitten werden.

Die oben genannten maximalen $Q_E$-Werte können in Abhängigkeit von Polymerisationsparametern, wie Zeit, Temperatur, Katalysatorzusammensetzung u.a., insbesondere jedoch von der Katalysatorzusammensetzung, in verschiedene Bereiche des sichtbaren Lichts fallen. Es kann wünschenswert sein, den Bereich des maximalen $Q_E$-Werts dadurch zu verbreitern, daß mehr als ein Katalysator zur Polymerisation eingesetzt wird und dadurch mehrere $Q_E$-Maxima erzeugt werden. Ein prinzipiell gleicher Effekt wird durch Verschneiden von Polymerlösungen oder ausgefällten Polymeren, die unter verschiedenen Polymerisationsparametern hergestellt wurden, erreicht.

Die Polarisationsfolie kann jedoch auch durch Verstrecken einer Koagulationsfolie erhalten werden. Hierbei wird nach dem Gießvorgang das Lösungsmittel nicht durch Abdampfen (bei Raumtemperatur oder höherer Temperatur und/oder erniedrigtem Druck) entfernt, sondern durch Kontakt mit einem Fällungsmittel, in das das Lösungsmittel der Polymerisations-(Gieß-)lösung hineinwandert, woraufhin nur das im allgemeinen leichter flüchtige Fällungsmittel abgedampft werden muß.

Fällungsmittel sind beispielsweise Toluol, Cyclohexan, Aceton, Methanol, Ethanol und weitere, in denen teilverseiftes PVAC nicht löslich ist.

Das polyacetylenhaltige Polymerprodukt kann jedoch auch aus der Polymerisationslösung mit einem der genannten Fällungsmittel gefällt und in üblicher Weise als Feststoff isoliert werden.

Das feste polyacetylenhaltige Polymerprodukt ist erneut in einem der für die Polymerisation genannten Lösungsmittel oder in Wasser löslich und kann aus einer solchen Lösung zu Folien vergossen werden. Es kann wünschenswert sein, der Gießlösung einen dem Fachmann bekannten Weichmacher zuzusetzen. Als übliche und geeignete Weichmacher können z.B. Glycerin oder Ethylenglykol in üblichen Mengen, wie etwa 1-50 %, bezogen auf das Polymer, eingesetzt werden. Derartige Zusätze sind besonders dann günstig, wenn das ausgefällte polyacetylenhaltige Polymerprodukt aus einer wäßrigen Gießlösung verarbeitet wird.

Die erfindungsgemäßen Polarisatoren können durch ein- oder beidseitiges Aufbringen von Adhäsionsschichten und Deckschichten zu Laminaten verarbeitet werden und sind in dieser Form vor mechanischer und chemischer Beschädigung geschützt. Der Ordnungsgrad einer verstreckten Polarisationsfolie wird durch die Laminierung nicht gestört. Die Erfindung betrifft daher auch diese spezielle Ausgestaltung der beschriebenen Polarisatoren.

Während bei vielen Laminaten mechanische Werte wie Festigkeit, Energieaufnahmevermögen (Sicherheitsgläser) und allgemein eine ausreichende Haftung der Laminatbestandteile im Vordergrund steht, kommen bei der Laminierung der erfindungsgemäßen hochwirksamen Polarisatoren weitere Forderungen hinzu, nämlich

1) eine hohe Lichtdurchlässigkeit, wobei sämtliche Trübungserscheinungen ausgeschlossen werden müssen,
2) ein hohes Maß an Lichtechtheit
3) Schutz der polarisierenden Kernschicht vor chemischen Umwelteinflüssen und
4) Verträglichkeit der Adhäsionsschichten und gegebenenfalls der Deckschichten mit der polarisierenden Kernschicht ohne Beeinträchtigung der optischen Eigenschaften.

Als Deckschichten kommen beispielsweise aromatische Polyester, Polyacrylnitrile, Poly(meth)acrylate, Polysulfone, aromatische Polycarbonate, Celluloseacetate, Celluloseacetobutyrate, Polyamide, Polyhydantoine, Polyimide, Polyamidimide, Polyparaphenylenbenzo-bis-imidazole und -oxazole, Polyetherketone und mineralische Gläser in Frage, wobei besonders die Polyester, Polyacrylate, Polycarbonate, Celluloseester und mineralische Gläser zu nennen sind. Die Transparenz dieser Materialien ist ihr wichtigstes Merkmal. Sie werden im allgemeinen als dünne Platten oder als Folien eingesetzt.

Als Adhäsionsschichten kommen dünne Schichten aus verklebungsfähigen Materialien in Frage, die die optischen Eigenschaften des Gesamtlaminats nicht beeinträchtigen, die geeignet sind, die Kernschicht und die Deckschichten mit ausreichender Klebekraft zu verbinden, und die ferner keine unerwünschte Veränderung in den Deckschichten und in der polarisierenden Kernschicht, insbesondere in der polarisierenden Kernschicht, hervorrufen. Hierfür kommen lösungsmittelfreie oder lösungsmittelhaltige Systeme in Betracht. Insbesondere für die lösungsmittelhaltigen Systeme ist die Forderung wichtig, keine chemischen Veränderungen im Inneren der Deckschichten und der polarisierenden Kernschicht hervorzurufen.

Als solche Adhäsionsmaterialien, die dem Fachmann grundsätzlich bekannt sind, seien beispielsweise genannt: mit Aminen, Säureanhydriden oder Polyamiden aushärtende Epoxidharze; Acrylatsysteme, die monomere und oligomere Systeme mit Vinylgruppen sein können, die nach dem Aufbringen der Deckschicht thermisch, radikalisch oder photochemisch gehärtet werden können; Mischungen von Polyacrylaten mit Phenolharzen, die in Lösung aufgebracht werden; Isocyanatklebstoffe und Polyurethane.

Die als Adhäsionsschichten einzusetzenden Klebematerialien können beispielsweise durch Aufgießen einer Lösung dieses Adhäsionsmaterials auf die polarisierende Kernschicht und Abdampfen des Lösungsmittels aufgebracht werden. Die so auf einer oder beiden Seiten mit Adhäsionsschichten versehene polarisierende Kernschicht kann dann mit den Deckschichten verbunden werden.

Ebenso kann auch umgekehrt verfahren werden und zunächst Adhäsionsmaterial auf die Deckschicht(en)

aufgebracht werden, woraufhin wiederum ein Zusammenfügen der mit Adhäsionsschichten versehenen Deckschichten mit der polarisierenden Kernschicht vorgenommen wird. Die Dicke der einzelnen Schichten ist in außerordentlich weiten Grenzen einstellbar und nicht erfindungswesentlich. Für die Adhäsionsschichten seien Dicken von 0,5 bis 50 µm, bevorzugt 0,5 bis 20 µm, und für die Deckschichten Dicken von 5 µm bis 1 mm, bevorzugt 5 bis 100 µm, genannt. Bei den Deckschichten kann es sich aber auch um optische Linsen oder Prismen mit größeren Dicken handeln. Die Kernschicht kann 1 bis 100 µm, bevorzugt 5 bis 50 µm dick sein.

Die erfindungsgemäße Polarisatorfolie, aber auch Adhäsions- bzw. Deckschichten können ferner mit den dem Fachmann bekannten Stabilisatoren, wie UV-Absorbern, HALS-Typen und Radikalfängern gegen UV-Strahlung, chemischen oder thermischen Abbau stabilisiert werden; als typische Stabilisatoren sei hierfür Ionol® und Bayer UV 340® genannt, die aber durch viele andere Stabilisatoren ersetzt oder ergänzt werden können. Hierbei tritt keine Minderung der optischen Qualität der Polarisationsfolie ein.

Beispiel 1

Katalysatorherstellung

5 mmol Bis-cyclooctadien-nickel(O) in 100 ml trockenem stickstoffgesättigtem Toluol wurden unter Stickstoff mit 5 mmol Benzoyl-methylen-triphenylphosphoran und 5 mmol Methylen-trimethylphosphoran gemischt. Unter intensivem Rühren erwärmte man ca. 1 Stunde auf 40 bis 60°C. Die dunkelgelb-braune Lösung wurde filtriert und im Vakuum zur Trockne eingeengt. Der gelbe Katalysator wurde in 25 ml trockenem stickstoffgesättigtem Dimethylformamid gelöst. Diese Lösung bzw. ein Teil derselben wurde bei der nachfolgenden Acetylenpolymerisation eingesetzt.

Beispiel 2

Polyvinylalkohol-polyacetylen (PVA-PAC)

In einem 250 ml Reaktionskolben (Gaseinleitung, Tropftrichter ohne Druckausgleich mit $N_2$-Zuführung, Rührer, Innenthermometer, Rückflußkühler mit Blasenzähler) wurden unter Inertgas 5 g Polyvinylalkohol (PVA; Verseifungsgrad des Polyvinylacetats 88%) in 245 g trockenem DMF (entgast, $N_2$-gesättigt) bei 120°C gelöst und dann auf 80°C temperiert. Anschließend wurde 1,0 mmol des vorstehend beschriebenen Katalysators in 5 ml DMF unter $N_2$ eingerührt und ein gleichmäßiger Strom von Acetylengas (Trockeneis/Aceton) während 15 sec. eingeleitet. Die Reaktionslösung wurde anschließend durch ein Polyamid-Tuch von 200 µm Maschenweite filtriert.

Die klare blaue PVA-PAC Lösung (Absorptionsmaximum 633 nm) wurde heiß auf einer PET-Folie mit einem Rakel in einer Schicht von 400 µm ausgestrichen. Nach Abdampfen des Lösungsmittels erhielt man eine klare, dunkel-blaue Folie, die von der Unterlage abgezogen und bei ca. 130°C auf $\varepsilon$ = 760% gereckt wurde.

Die gereckte, transparente, hellgraue Folie wies bei 600 nm einen Polarisationsgrad von 99,4% auf.

$Q_E^{max} = 26.3$

$Q_E \geqq 20$ bei 580 - 730 nm

$Q_E \geqq 10$ bei 440 - 780 nm

$P \geqq 95\%$ bei 460 - 700 nm.

Beispiele 3 - 5

Weitere Katalysatoren wurden analog Beispiel 1 hergestellt. Ihre Liganden, die Polymerisationsbedingungen und die Eigenschaften der erhaltenen Polarisationsfolien gehen aus der folgenden Tabelle hervor.

**Tabelle**: Beispiele 3-5, Herstellung und Eigenschaften von Polarisationsfolien

| Beispiel Nr. | Katalysator | Kat.-Menge pro 5 g PVA (mmol) | PVA-Konz. in DMF % | Polymerisations- | |
|---|---|---|---|---|---|
| | | | | Temp. °C | Zeit sec. |
| 3 | $NiPh(Ph_2PCHCPhO)(Me_3PCH_2)$ | 0,5 | 5 | 80 | 15 |
| 4 | $NiPh(Ph_2PCHCPhO)(Me_3PCH_2)$ | 0,375 | 7,5 | 80 | 15 |
| 5 | $NiPh(Ph_2PCHCPhO)(Pr^i_3PCHPh)$ | 0,25 | 5 | 80 | 15 |

Me = Methyl, $Pr^i$ = iso-Propyl, Ph = Phenyl

<u>Tabelle</u>: Beispiele 3-5, Herstellung und Eigenschaften von Polarisationsfolien

| Beispiel Nr. | 1. Absorptions-Maximum der Rkt. Lsg. λ/nm | Verstreckungsgrad ε % | $Q_E \geq 10$ im Wellenlängenbereich nm | $Q_E$ max | $P \geq 95\%$ im Wellenlängenbereich nm | $P_{max}$ % |
|---|---|---|---|---|---|---|
| 3 | 602 | 732 | 440-750 | 19.0 | 350-700 | 99.7 |
| 4 | 625 | 746 | 500-800 | 19.9 | 350-700 | 99.8 |
| 5 | 637 | 720 | 450-750 | 25.4 | 400-700 | 99.8 |

## Patentansprüche

1. Polarisatoren, herstellbar durch Polymerisation von Acetylen bei 20-120°C in der Lösung eines Copolymers in Gegenwart eines Nickel-Katalysators, der erhalten wird durch Umsetzung einer Nickel-(0)-Verbindung oder einer Verbindung, die in situ in eine Nickel-(0)-Verbindung übergeführt werden kann, mit Phosphorverbindungen der Formeln

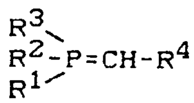 und 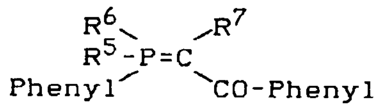

I II ,

worin

| | |
|---|---|
| $R^1$, $R^2$ und $R^3$ | unabhängig voneinander $C_1$-$C_8$-Alkyl, Phenyl oder Benzyl bedeuten, |
| $R^4$ | für Wasserstoff, $C_1$-$C_8$-Alkyl oder Phenyl steht und |
| $R^5$, $R^6$ und $R^7$ | unabhängig voneinander $C_1$-$C_8$-Alkyl oder Phenyl bedeuten, wobei $R^7$ zusätzlich Wasserstoff oder Acyl bedeuten kann, |

oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder einem Gemisch aus p-Benzochinon und einem Phosphin der Formel

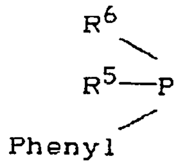 III ,

in der $R^5$ und $R^6$ die genannte Bedeutung haben,
und einer Verbindung der Formel I, Verarbeitung des Polymerisats zu Folien und Verstreckung derselben, dadurch gekennzeichnet, daß die Polymerisation von Acetylen während einer Zeit von 5-300 sec. durchgeführt wird, daß im Copolymer 70 bis 90 % aller Comonomereinheiten Vinylalkoholeinheiten sind, und daß die Verstreckung einen Verstreckungsgrad $\varepsilon$ von mindestens 600 % aufweist.

2. Polarisatoren nach Anspruch 1, dadurch gekennzeichnet, daß in Gegenwart eines Nickel-Katalysators polymerisiert wird, der erhalten wird durch Umsetzung einer Nickel-(0)-Verbindung mit Phosphorverbindungen der Formeln

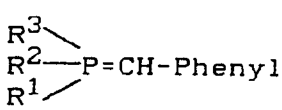 und 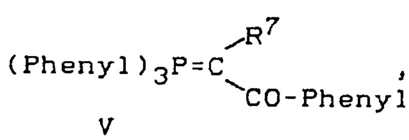 ,

IV V

worin
$R^1$, $R^2$, $R^3$ und $R^7$ die in Anspruch 1 genannte Bedeutung haben,
oder Nickel-Katalysatoren, herstellbar durch Umsetzung einer Nickel-(O)-Verbindung oder einer Verbindung, die in situ in eine Nickel-(O)-Verbindung übergeführt werden kann, mit einem Addukt oder Gemisch aus p-Benzochinon und Triphenylphosphin und einer Verbindung der Formel IV.

3. Polarisatoren nach Anspruch 1, herstellbar bei einer Konzentration von $10^{-1}$ bis $10^{-5}$, bevorzugt $10^{-2}$ bis $10^{-4}$ Mol Ni-Katalysator pro Liter Polymerisationsansatz.

4. Polarisatoren nach Anspruch 1, bei denen für die Polymerisation eine Dauer von 5-200 Sekunden angesetzt wird.

5. Polarisatoren nach Anspruch 1, gekennzeichnet durch ein- oder beidseitig angebrachte Adhäsions- und Deckschichten.

## Claims

1. Polarisers which may be produced by polymerising acetylene at 20-120°C in a solution of a copolymer in the presence of a nickel catalyst, which is obtained by reacting a nickel(O) compound or a compound which may be converted *in situ* into a nickel(O) compound with phosphorus compounds of the formulae

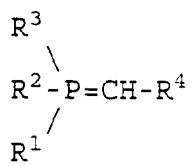

I

and

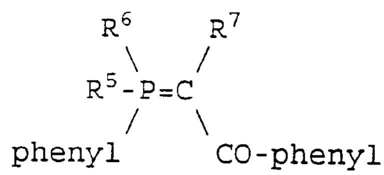

II

in which

| | |
|---|---|
| $R^1$, $R^2$ and $R^3$ | mutually independently mean $C_1$-$C_8$ alkyl, phenyl or benzyl |
| $R^4$ | denotes hydrogen, $C_1$-$C_8$ alkyl or phenyl and |
| $R^5$, $R^6$ and $R^7$ | mutually independently mean $C_1$-$C_8$ alkyl, or phenyl, wherein $R^7$ may additionally mean hydrogen or acyl, |

or nickel catalysts which may be produced by reacting a nickel(O) compound or a compound which may be converted *in situ* into a nickel(O) compound with an adduct or mixture of p-benzoquinone and a phosphine of the formula

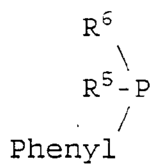

III

in which $R^5$ and $R^6$ have the stated meaning,
and a compound of the formula I, processing of the polymer into films and stretching of the same, characterised in that the acetylene is polymerised for a period of 5-300 seconds, that 70 to 90% of all the comonomer units in the copolymer are vinyl alcohol units and that stretching is performed to a degree of stretching ε of at least 600%.

2. Polarisers according to claim 1, characterised in that polymerisation is performed in the presence of a nickel catalyst which is obtained by reacting a nickel(O) compound with phosphorus compounds of the formulae

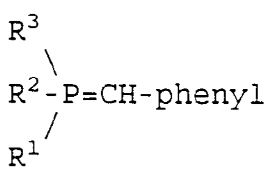

IV

and

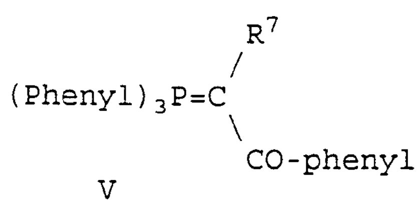

V

in which
$R^1$, $R^2$, $R^3$ and $R^7$ have the meaning stated in claim 1,
or nickel catalysts which may be produced by reacting a nickel(O) compound or a compound which may be converted *in situ* into a nickel(O) compound, with an adduct or mixture of p-benzoquinone and triphenylphosphine and a compound of the formula IV.

3. Polarisers according to claim 1 which may be produced at a concentration of $10^{-1}$ to $10^{-5}$, preferably $10^{-2}$ to $10^{-4}$ mol of Ni catalyst per litre of polymerisation mixture.

4. Polarisers according to claim 1, in which the polymerisation time is set at 5-200 seconds.

5. Polarisers according to claim 1, characterised by having adhesive and outer layers applied to one or both sides.

## Revendications

1. Polariseurs pouvant être préparés par polymérisation de l'acétylène, entre 20 et 120°C, en solution dans un copolymère, en présence d'un catalyseur au nickel, qui a été obtenu en faisant réagir un composé de nickel-(O) ou un composé qui peut être transformé in situ en un composé de nickel-(O) avec des composés phosphorés de formules

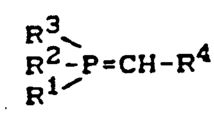 I et 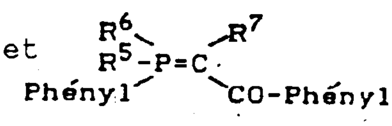 II

dans lesquelles
$R^1$, $R^2$ et $R^3$ représentent, indépendamment les uns des autres, un alkyle en $C_1$-$C_8$, un phényle ou un benzyle;
$R^4$ représente de l'hydrogène, un alkyle en $C_1$-$C_8$ ou un phényle; et
$R^5$, $R^6$ et $R^7$ représentent, indépendamment les uns des autres, un alkyle en $C_1$-$C_8$ ou un phényle, tandis que $R^7$ peut représenter en outre de l'hydrogène ou un radical acyle, ou avec des catalyseurs au nickel pouvant être préparés en faisant réagir un composé de nickel-(O) ou un composé pouvant être transformé in situ en un composé de nickel-(O) avec un adduit ou un mélange de p-benzoquinone et d'une phosphine de formule

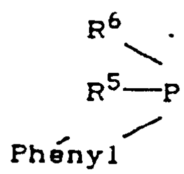 III ,

dans laquelle $R^5$ et $R^6$ ont les significations précitées et un composé de formule I, transformation du produit polymère en feuilles minces et étirement de celles-ci, caractérisés en ce que la polymérisation de l'acétylène est effectuée pendant une durée de 5 à 300 secondes, en ce que le copolymère comporte 70 à 90% de toutes les unités de comonomères formées d'unités d'alcool vinylique et en ce que l'étirement est réalisé avec un degré d'étirement ε d'au moins 600%.

2. Polariseur selon la revendication 1, caractérisé en ce qu'on effectue la polymérisation en présence d'un catalyseur au nickel qui est obtenu en faisant réagir un composé de nickel-(O) avec des composés phosphorés de formules

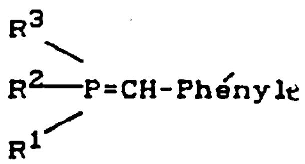 IV et 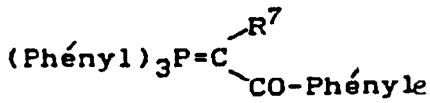 V,

dans lesquelles $R^1$, $R^2$, $R^3$ et $R^7$ ont les significations mentionnées dans la revendication 1, ou des catalyseurs au nickel pouvant être préparés en faisant réagir un composé de nickel-(O) ou un composé qui peut être transformé in situ en un composé de nickel-(O) avec un adduit ou un mélange de p-benzoquinone et de triphénylphosphine et un composé de formule IV.

3. Polariseurs selon la revendication 1, pouvant être préparés avec une concentration de $10^{-1}$ à $10^{-5}$ et, de préférence, de $10^{-2}$ à $10^{-4}$ moles de catalyseur au nickel par litre de substance à polymériser utilisée.

4. Polariseurs selon la revendication 1, dans lesquels on utilise pour la polymérisation une durée de 5 à 200 secondes.

5. Polariseurs selon la revendication 1, caractérisés par des couches d'adhérence et de recouvrement, appliquées sur une face ou sur les deux faces.